# EUROPEAN PATENT SPECIFICATION

(11) **EP 0 425 635 B1**
(45) Date of publication and mention of the grant of the patent: **10.08.1994**
(21) Application number: 90907218.3
(22) Date of filing: 01.05.1990
(51) Int. Cl.: F16J 1/00, F02F 3/28

(54) **PISTON**
KOLBEN
PISTON

(30) Priority: 06.05.1989 GB 8910473
(43) Date of publication of application: 08.05.1991
(73) Proprietor: VICKERS PLC, London SW1P 4RA (GB)
(72) Inventor: ROPER, Jeffrey, Near Daventry NN11 6BE (GB)
(74) Representative: Leach, John Nigel
(86) International application number: GB9000671
(87) International publication number: WO9013763

(56) References cited:
- WO-A-79/00862
- CH-A- 378 469
- GB-A- 1 096 655
- US-A- 2 915 348

## Description

### Description of Invention

This invention relates to a piston having a crown, a head land depending downwardly from the crown, a skirt and at least one groove between the skirt and the head land to receive a piston ring (WO-A-7900862).

Typically, a plurality of lands, separated by grooves, are provided between the crown and the skirt. For example, the piston may have three lands, a head land next to the crown, an intermediate land and a bottom land next to the skirt, there being a first compression ring in a groove between the head and intermediate lands, a second compression ring in a groove between the intermediate and bottom lands and an oil control ring in a groove between the bottom land and the skirt. However, a different number of lands may be provided, for example, there may be only a head land between the crown and skirt with a single groove therebetween with a single ring therein.

Hitherto such pistons have been made so that, in use at normal operating temperature, there is a clearance between the head land and a cylinder bore, in which the piston is used, which is greater than the clearance between the skirt and the cylinder. When the piston is cold the difference between the clearances is greater because there is a falling thermal gradient between the crown of the piston and the bottom of the skirt so that there is a greater extent of thermal expansion of the piston towards the crown.

As a result, the head land normally runs at relatively large clearances relative to the cylinder wall, for example at 0.40 - 1.00mm diametral clearance with pistons having a diameter of about 50mm - 100mm. This relatively large clearance is to ensure that contact with the cylinder bore is avoided throughout the thermal operating range of the piston as well as to avoid contact as a result of tipping of the piston which can occur, particularly when the engine is cold.

This relatively large clearance results in the following three disadvantages.

Even at maximum operating temperatures there is a "dead gas zone" in the clearance region between the head land and the cylinder bore which can lead to detonation and result in land burning and result in local melting of the land as well as damage to the top ring. Often breakage of both the land and the ring occurs. There is an increasing trend to operate internal combustion engines with lean mixtures for fuel economy and to reduce exhaust emissions, especially in engines having two valves per cylinder and this exacerbates the problem as the spark plug is located to one side of the cylinder and land burning occurs on the opposite side at the maximum distance from the spark plug.

The relatively large head land clearance exposes the top ring to combustion gases which can lead to ring collapse and reduced tension of the spring and higher than desired blow-by of gases which leads to reduced efficiency and contamination of the lubricating oil of the engine by the products of combustion.

There is a current trend to make pistons with a relatively high diameter to height ratio so that the length of the skirt available to support the piston is relatively small thus saving weight and minimising the area of the piston available for frictional restraint by the bore. As a result of the relatively large clearance provided between the head land and the cylinder bore there is a relatively great tendency for such pistons to tip, especially with so-called "slipper" designs, which have not only short skirt support areas, but also skirt support areas which are narrow in the thrust-trailing axis so allowing additional movement of the piston along the gudgeon pin axis and poor control.

An object of the invention is to provide a new and improved piston whereby the above mentioned disadvantages are overcome or are reduced.

According to the present invention we provide a piston having a crown, a head land depending downwardly from the crown, a skirt and at least one groove between the head land and the skirt to receive a piston ring characterised in that the head land is provided with a part which has a greater cross-sectional dimension than any portion of the piston between said part and the skirt and the skirt is of greater cross-sectional dimension than said part.

Said part and the skirt may have said greater cross-sectional dimension at room temperature.

Said part of the head land may comprise at least one peripherally extending rib which is of lesser width than the width of the head land.

Preferably, said part of the head land comprises a plurality of parallel peripherally extending ribs spaced apart along the width of the head land.

Said part of the head land may have three such ribs.

The or each rib may have a width lying in the range 0.5 - 1.0mm. Where there is more than one rib the ribs may be spaced by a distance lying in the range 1.25 - 1.5mm.

The or each rib may have a height lying in the range 0.17 - 0.20mm.

The outer i.e. cylinder bore adjacent surface of the or each rib may be tapered and when there is a plurality of ribs the outer surfaces of the ribs may lie on a common frusto-conical surface which decreases in diameter towards the crown of the piston.

Preferably, the piston has a plurality of lands, said part of the head land having a greater cross-sectional dimension than any part of the or each other land.

Said part of the head land may have said greater cross-sectional dimension at operating temperature.

Where there are a plurality of lands the or, at least one of the, or each land other than the head land may be of constant cross-sectional dimension or may taper towards the crown of the piston.

Preferably, the skirt and/or the or each land and/or the or each rib is circular in cross-section.

A piston embodying the invention will now be described by way of example with reference to the accompanying drawings wherein:

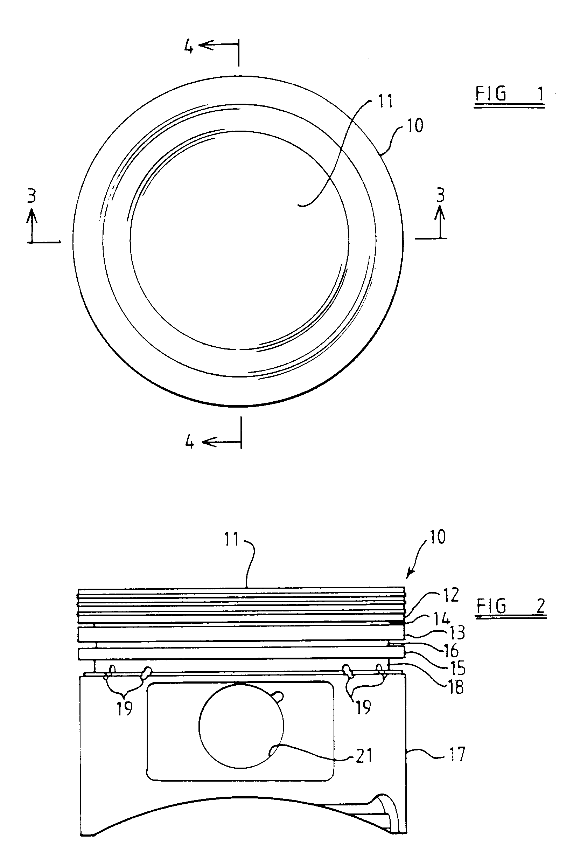

FIGURE 1 is a plan view of a piston embodying the invention;
FIGURE 2 is a side elevation of the piston of Figure 1;
FIGURE 3 is a section on the line 3-3 of Figure 1;
FIGURE 4 is a section on the line 4-4 of Figure 1;

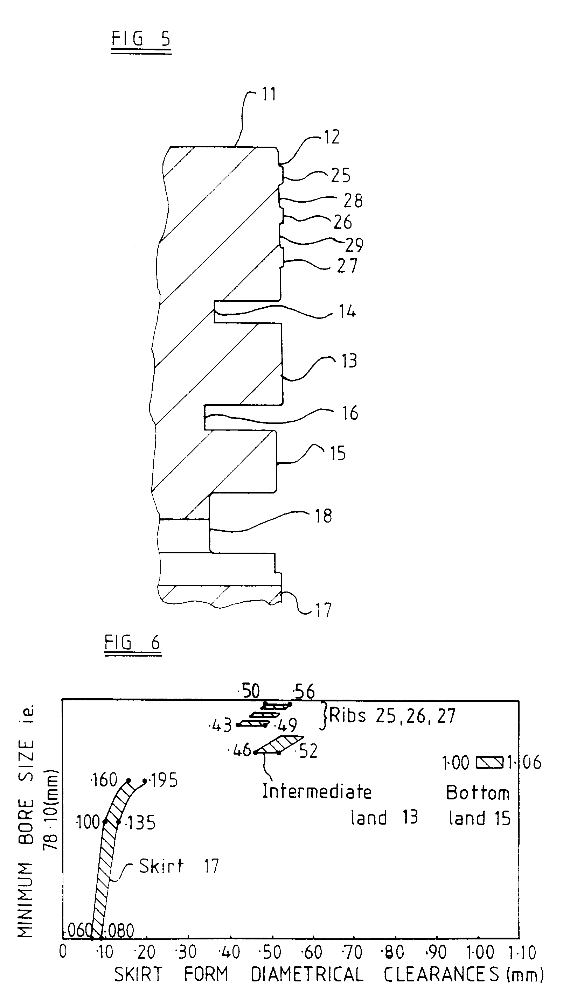

FIGURE 5 is a part of Figure 4 drawn to an enlarged scale, and
FIGURE 6 is a graphical representation of piston to cylinder bore clearance in respect of the piston shown in Figures 1 to 5.

Referring to the drawings, a piston 10 comprises a top wall or crown 11 from which a head land 12 depends downwardly. Below the head land 12 is intermediate land 13 separated from the head land 12 by a first groove 14 for a conventional compression piston ring, not shown. Below the intermediate land 13 is a bottom land 15 separated from the intermediate land 13 by a second groove 16 for a second compression piston ring, also not shown.

Below the bottom land 15 is a piston skirt 17 which is separated from the bottom land 15 by a third groove 18 to receive an oil control piston ring, also not shown. The groove 18 for the oil control ring is provided with a plurality of bores 19 which extend through the piston wall to a hollow interior 20 of the piston to permit passage of oil therethrough.

The piston is made in conventional manner and is provided with trunnions 21 for a conventional gudgeon pin to connect the piston to a connecting rod in conventional manner.

In this example the skirt 17 has a diameter of 78.030mm at its bottom end and a diameter of 77.85mm at its top end, the contour being a compound shape determined in accordance with the temperature gradient encountered in service.

The groove 18 has a diameter of 70.75mm. The bottom land 15 has a diameter of 77.07mm and is of constant diameter throughout its width. The groove 16 has a diameter of 70.10mm whilst the land 13 has a diameter at its bottom end of 77.61mm and is of frusto-conical configuration and the half angle of the frusto-conical surface being 0° 30. The groove 14 has a diameter of 70.90mm. The head land 17 is of frusto-conical configuration having a surface which lies in a continuation of the frusto-conical surface in which the surface of the land 13 lies.

Formed integrally with the land 12 are three upstanding ribs 25, 26, 27 which extend circumferentially around the land 12 and are spaced apart by grooves 28, 29. The lowermost rib 27 at its lowermost part has a diameter of 77.64mm. The topmost rib 25 has a diameter at its topmost part of 77.57mm and the surfaces of the ribs 25, 26, 27 lie on a frusto-conical surface bounded by the above mentioned topmost part of the rib 25 and lowermost part of the rib 27. The ribs 25, 26, 27 are 0.75mm wide and the above mentioned frusto-conical surface has a half angle of 0° 25'.

The above mentioned dimensions are when the piston is at ambient temperature and, of course, in practice the above mentioned dimensions are subject to the usual tolerances. When the piston is in use, then due to differential expansion between the top and bottom of the piston due to the temperature gradient arising from the fact that the top of the piston is subjected to a higher temperature than is the bottom of the piston, the head land and its associated ribs expand diametrically more than the parts of the piston therebelow and therefore the ribs 25, 26, 27 are closer to the wall of a co-operating cylinder bore than all portions of the piston between the ribs and the skirt 17. It is, of course, necessary that this condition obtains throughout the circumference of the ribs at working temperature and in practice slight wear takes place to establish the desired conformability and correct sliding clearance. The clearances obtained in practice at room temperature are shown in Figure 6.

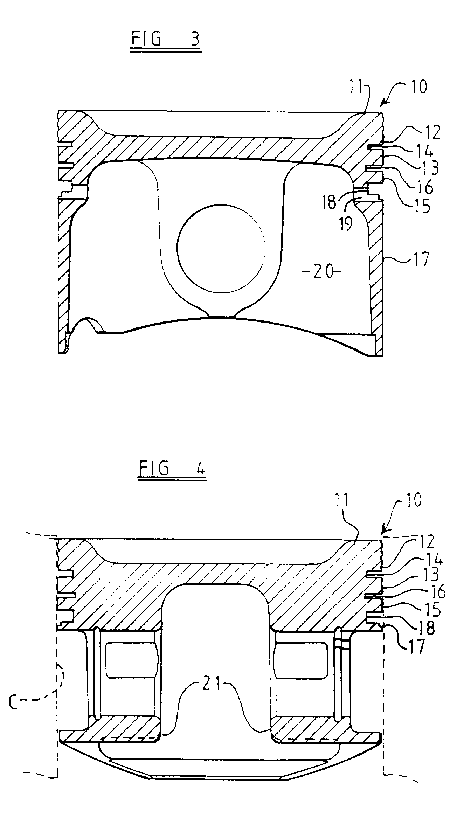

The above mentioned specific dimensions are only given by way of example and are for a piston intended to fit in a cylinder bore C, see Figure 4, of 78.11mm diameter. If desired, the various parts of the dimensions mentioned above may be of other dimensions suitable for the particular application concerned and, for example, where a piston bore of the same diameter is concerned the respective parts may be of different dimensions depending upon the temperature gradient obtained in practice with any particular engine.

For example, the or each rib may have a width lying in the range 0.5 - 1.0mm but where there is more than one rib the ribs may be spaced by a distance lying in the range 1.25 - 1.5mm. The or each rib may have a height lying in the range 0.17 - 0.20mm. Although in the above example a piston having three lands with three grooves for piston rings has been described, if desired the invention may be applied to pistons having a different number of lands including, for example, a piston having a single land separated by a single groove from the skirt.

Although in the above example the head land has been described as having three ribs, if desired the head land may be provided with more than three or less than three ribs including a single rib.

The invention also encompasses a piston in which the head land is formed without a discrete rib, of lesser width than the width of the land, but where the land is nevertheless formed so as to have a part which has throughout its circumference, at the operating temperature, a greater cross-sectional dimension than any portion of the piston between said part and the skirt. The above mentioned part may comprise the whole of the width of the head land or may comprise only a localised part thereof. For example, the head land may be of frusto-conical configuration with the larger diameter at or adjacent the crown end of the head land. Alternatively, the head land may be of bi-frusto-conical configuration and the pair of frusto-cones may be of the same or different half angle and the line of junction between the bases of the frusto-cones may be disposed at any desired position along the width of the head land. If desired, the head land may be of other configuration and may for example be of curvilinear shape in a section taken on a diametral plane of the piston.

The invention may be applied to pistons of any desired diameter, although it is particularly concerned with pistons having a diameter lying in the range 50mm - 120mm.

A piston embodying the present invention has the advantages that there is a reduced "dead gap zone" between the head land and a cylinder bore by virtue of the provision of the at least one rib, thereby limiting the possibility of detonation in this zone.

The presence of the or each rib protects the top ring from combustion gases so that the ring remains cleaner and suffers less from heat collapse. Where a plurality of ribs are provided blow-by is reduced due to the labyrinth effect provided by the plurality of ribs and this has been found that flow-by has been reduced by as much as 50%.

In addition the provision of the at least one rib gives support at the gudgeon pin axis which is particularly valuable with slipper design pistons to prevent side tipping and reduce skirt loads and scuffing.

The piston described hereinbefore has been specifically designed for a spark ignition engine but the invention may be applied to pistons for other applications.

## Claims

1. A piston (10) having a crown (11), a head land (12) depending downwardly from the crown, a skirt (17) and at least one groove (14,16,18) between the head land (12) and the skirt (17) to receive a piston ring characterised in that the head land (12) is provided with a part (25,26,27) which has a greater cross-sectional dimension than any portion of the piston between said part and the skirt (17) and the skirt is of greater cross-sectional dimension than said part.

2. A piston according to Claim 1 wherein said part (25,26,27) and the skirt (17) have said greater cross-sectional dimensions at room temperature.

3. A piston according to claim 1 or claim 2 wherein said part of the head land comprises at least one peripherally extending rib (25,26,27) which is of lesser width than the width of the head land (12).

4. A piston according to Claim 3 wherein said part of the head land comprises a plurality of parallel peripherally extending ribs (25,26,27) spaced apart along the width of the head land (12).

5. A piston according to Claim 4 wherein said part of the head land (17) has three such ribs (25,26,27).

6. A piston according to any one of Claims 3 to 5 wherein the or each rib (25,26,27) has a width lying in the range 0.5 - 1.0mm.

7. A piston according to any one of Claims 3 to 6 wherein there are more than one rib (25,26,27) and the ribs are spaced by a distance lying in the range 1.25 - 1.5mm.

8. A piston according to any one of Claims 3 to 7 wherein the or each rib (25,26,27) has a height lying in the range 0.17 - 0.20mm.

9. A piston according to any one of Claims 3 to 8 wherein the outer, i.e. cylinder bore adjacent, surface of the or each rib (25,26,27) is tapered.

10. A piston according to Claim 9 wherein there are a plurality of ribs (25,26,27) and the outer surfaces of the ribs lie on a common frusto-conical surface which decreases in diameter towards the crown (11) of the piston.

11. A piston according to any one of the preceding claims wherein the piston has a plurality of lands (12,13,15), said part (25,26,27) of the head land having a greater cross-sectional dimension than any part of the or each other land (12,13,15).

12. A piston according to claim 11 wherein said part of the head land has said greater cross-sectional dimension at operating temperature.

13. A piston according to claim 11 or claim 12 wherein there are a plurality of lands (12,13,15) and at least one land other than the head land is of constant cross-sectional dimension.

14. A piston according to Claim 11 or 12 wherein there are a plurality of lands (12,13,15) and at least one land other than the head land tapers towards the crown (11) of the piston.

15. A piston according to any one of the preceding claims wherein the skirt (17) and/or the or each land (12,13,15) and/or the or each rib (25,26,27) is circular in cross-section.

16. A piston according to any one of the preceding claims wherein the piston (10) is a slipper piston.

17. A piston according to any one of the preceding claims wherein the skirt (17) has a smaller cross-sectional dimension at its top end than at its bottom end.

18. A piston according to Claim 17 wherein the skirt (17) has a contour between said top and bottom ends which is of compound shape.

## Patentansprüche

1. Kolben (10) mit einem Kolbenbodenrand (11), einem Kopfsteg (12), der vom Kolbenbodenrand abwärts verläuft, einem Kolbenhemd (17) und wenigstens einer Nut (14, 16, 18) zwischen dem Kopfsteg (12) und dem Kolbenhemd (17) zur Aufnahme eines Kolbenrings, dadurch gekennzeichnet, daß der Kopfsteg (12) einen Abschnitt (25, 26, 27) aufweist, der eine größere Querschnittsabmessung als irgendein Teil des Kolbens zwischen diesem Abschnitt und dem Kolbenhemd (17) hat, und daß das Kolbenhemd eine größere Querschnittsabmessung als dieser Abschnitt aufweist.

2. Kolben nach Anspruch 1, dadurch gekennzeichnet, daß der Abschnitt (25, 26, 27) und das Kolbenhemd (17) die besagten größeren Querschnittsabmessungen bei Raumtemperatur aufweisen.

3. Kolben nach Anspruch 1 oder 2, dadurch gekennzeichnet, daß der besagte Abschnitt des Kopfstegs wenigstens eine sich nach außen erstreckende Leiste (25, 26, 27) umfaßt, die weniger breit ist als der Kopfsteg (12).

4. Kolben nach Anspruch 3, dadurch gekennzeichnet, daß der besagte Abschnitt des Kopfstegs eine Anzahl sich parallel nach außen erstreckender Leisten (25, 26, 27) umfaßt, die mit gegenseitigem Abstand entlang der Breite des Kopfstegs (12) angeordnet sind.

5. Kolben nach Anspruch 4, dadurch gekennzeichnet, daß der besagte Abschnitt des Kopfstegs (17) drei solcher Leisten (25, 26, 27) aufweist.

6. Kolben nach einem der Ansprüche 3 bis 5, dadurch gekennzeichnet, daß die oder jede Leiste (25, 26, 27) eine Breite aufweist, die im Bereich von 0,5 bis 1 mm liegt.

7. Kolben nach einem der Ansprüche 3 bis 6, dadurch gekennzeichnet, daß mehr als eine Leiste (25, 26, 27) vorhanden ist und die Leisten mit einem gegenseitigen Abstand im Bereich von 1,25 bis 1,5 mm angeordnet sind.

8. Kolben nach einem der Ansprüche 3 bis 7, dadurch gekennzeichnet, daß die oder jede Leiste (25, 26, 27) eine Höhe im Bereich von 0,17 bis 0,20 mm aufweist.

9. Kolben nach einem der Ansprüche 3 bis 8, dadurch gekennzeichnet, daß die äußere, d.h. die der Zylinderbohrung zunächstliegende Fläche der oder jeder Leiste (25, 26, 27) konisch ist.

10. Kolben nach Anspruch 9, dadurch gekennzeichnet, daß eine Anzahl von Leisten (25, 26, 27) vorhanden ist und die Außenfläche der Leisten auf einer gemeinsamen, kegelstumpfförmigen Fläche liegen, deren Durchmesser sich in Richtung auf den Kolbenbodenrand (11) verringert.

11. Kolben nach einem der vorangehenden Ansprüche, dadurch gekennzeichnet, daß der Kolben eine Anzahl von Stegen (12, 13, 15) aufweist, wobei der Abschnitt (25, 26, 27) des Kopfstegs eine größere Querschnittsabmessung als irgendein Abschnitt des oder jedes anderen Stegs (12, 13, 15) hat.

12. Kolben nach Anspruch 11, dadurch gekennzeichnet, daß der besagte Abschnitt des Kopfstegs bei Betriebstemperatur die besagte größere Querschnittsabmessung hat.

13. Kolben nach Anspruch 11 oder 12, dadurch gekennzeichnet, daß eine Anzahl von Stegen (12, 13, 15) vorhanden ist und wenigstens ein anderer als der Kopfsteg eine konstante Querschnittsabmessung aufweist.

14. Kolben nach Anspruch 11 oder 12, dadurch gekennzeichnet, daß eine Anzahl von Stegen (12, 13, 15) vorhanden sind und wenigstens ein anderer als der Kopfsteg in Richtung auf den Kolbenbodenrand (11) konisch zuläuft.

15. Kolben nach einem der vorangehenden Ansprüche, dadurch gekennzeichnet, daß das Kolbenhemd (17) und/oder der oder jeder Steg (12, 13, 15) und/oder die oder jede Leiste (25, 26, 27) im Querschnitt kreisförmig sind.

16. Kolben nach einem der vorangehenden Ansprüche, dadurch gekennzeichnet, daß der Kolben (10) ein Gleitschuhkolben ist.

17. Kolben nach einem der vorangehenden Ansprüche, dadurch gekennzeichnet, daß das Kolbenhemd (17) an seinem oberen Endabschnitt eine kleinere Querschnittsabmessung als an seinem unteren Endabschnitt aufweist.

18. Kolben nach Anspruch 17, dadurch gekennzeichnet, daß das Kolbenhemd (17) zwischen dem oberen und unteren Endabschnitt eine Kontur von zusammengesetzter Gestalt besitzt.

## Revendications

1. Un piston (10) comportant une couronne (11), un cordon d'extrémité (12) solidaire de la base de la couronne, une jupe (17) et au moins une rainure (14, 16, 18) entre le cordon d'extrémité (12) et la jupe (17) dans laquelle se loge un anneau de piston, caractérisé par le fait que ledit cordon d'extrémité (12) comporte une partie (25, 26, 27) de section transversale de dimension supérieure à la dimension de la section de toute autre partie de piston comprise entre ladite partie et la jupe (17) et ladite jupe (17) a une section transversale de dimension supérieure à celle de ladite partie.

2. Un piston selon la revendication 1 dans lequel la partie (25, 26, 27) et la jupe (17) ont lesdites sections de dimension plus grande à température ambiante.

3. Un piston selon la revendication 1 ou la revendication 2 dans lequel ladite partie du cordon d'extrémité (12) comprend au moins une nervure qui s'étend périphériquement (25, 26, 27) dont la largeur est inférieure à la largeur du cordon d'extrémité (12).

4. Un piston selon la revendication 3 dans lequel ladite partie de cordon d'extrémité (12) comprend une pluralité de nervures périphériques parallèles (25, 26, 27) distantes l'une de l'autre le long de la largeur du cordon d'extrémité (12).

5. Un piston selon la revendication 4 dans lequel ladite partie de cordon d'extrémité (12) comporte lesdites trois nervures (25, 26, 27).

6. Un piston selon l'une quelconque des revendications 3 à 5 dans lequel l'une ou chacune desdites nervures (25, 26, 27) a une largeur de 0,5 mm à 1,0 mm.

7. Un piston selon l'une quelconque des revendications 3 à 6 comportant plus d'une nervure (25, 26, 27) et l'intervalle entre lesdites nervures a une largeur de 1,25 mm à 1,5 mm.

8. Un piston selon l'une quelconque des revendications 3 à 7 dans lequel l'une ou chacune desdites nervures (25, 26, 27) a une hauteur de 0,17 mm à 0,20 mm.

9. Un piston selon l'une quelconque des revendications 3 à 8 dans lequel la surface extérieure de l'une ou chacune des nervures (25, 26, 27) -- c'est à dire adjacente à l'alésage du cylindre -- est en pente.

10. Un piston selon la revendication 9, ayant une pluralité de nervures (25, 26, 27) et les faces extérieures desdites nervures sont toutes situées sur une même surface tronconique dont le diamètre se rétrécit vers la couronne (11) du piston.

11. Un piston selon l'une quelconque des revendications ci-dessus dans lequel le piston comporte une pluralité de cordons (12, 13, 15), ladite partie (25, 26, 27) du cordon d'extrémité ayant une section de plus grande dimension que celle de toute autre partie de l'un ou de chacun des autres cordons (12, 13, 15).

12. Un piston selon la revendication 11 dans lequel ladite partie de cordon d'extrémité comporte ladite section de plus grande dimension à la température de fonctionnement.

13. Un piston selon la revendication 11 ou selon la revendication 12 comportant une pluralité de cordons (12, 13, 15) et au moins un cordon autre que le cordon d'extrémité a une section de dimension constante.

14. Un piston selon la revendication 11 ou 12 comportant une pluralité de cordons (12, 13, 15) et dont au moins un cordon autre que le cordon d'extrémité a une pente dirigée vers la couronne (11) du piston.

15. Un piston selon l'une quelconque des revendications précédentes dans lequel la jupe (17) et/ou le cordon ou chacun des cordons (12, 13, 15) et/ou la nervure ou chacune des nervures (25, 26, 27) a ou ont une section circulaire.

16. Un piston selon l'une quelconque des revendications précédentes dans lequel le piston (10) est un piston léger.

17. Un piston selon l'une quelconque des revendications précédentes dans lequel la jupe (17) a une section de dimension plus faible à son extrémité supérieure qu'à son extrémité inférieure.

18. Un piston selon la revendication 17 dans lequel la jupe (17) comporte entre ladite extrémité supérieure et ladite extrémité inférieure un profil de forme composite.
